(19) Europäisches Patentamt
European Patent Office
Office européen des brevets

(11) **EP 4 353 684 A1**

(12) **EUROPEAN PATENT APPLICATION**
published in accordance with Art. 153(4) EPC

(43) Date of publication:
**17.04.2024 Bulletin 2024/16**

(21) Application number: **22816129.5**

(22) Date of filing: **31.05.2022**

(51) International Patent Classification (IPC):
**C01B 39/48** (2006.01)      **B01J 20/18** (2006.01)
**B01J 20/28** (2006.01)      **B01J 20/30** (2006.01)

(52) Cooperative Patent Classification (CPC):
**B01D 53/02; B01D 53/92; B01J 20/18; B01J 20/28;
B01J 20/30; C01B 39/48;** Y02T 10/12

(86) International application number:
**PCT/JP2022/022204**

(87) International publication number:
**WO 2022/255383 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.06.2021 JP 2021093264**

(71) Applicant: **Tosoh Corporation
Yamaguchi 746-8501 (JP)**

(72) Inventors:
• **MITSUHASHI, Ryo
Shunan-shi Yamaguchi 746-8501 (JP)**
• **NAKAZAWA, Naoto
Shunan-shi Yamaguchi 746-8501 (JP)**
• **USUI, Toyohiro
Shunan-shi Yamaguchi 746-8501 (JP)**

(74) Representative: **Müller-Boré & Partner
Patentanwälte PartG mbB
Friedenheimer Brücke 21
80639 München (DE)**

(54) **YFI-TYPE ZEOLITE, PRODUCTION METHOD THEREFOR, HYDROCARBON ADSORBENT,
AND HYDROCARBON ADSORPTION METHOD**

(57)    It is an object of the present disclosure to provide a YFI-type zeolite with a small difference in desorption starting temperature due to hydrothermal durability treatment, a method for producing the YFI-type zeolite, a hydrocarbon adsorbent containing the YFI-type zeolite and a hydrocarbon adsorption method using the YFI-type zeolite

The YFI-type zeolite is characterized in that the ratio of the mass of extra-framework aluminum to the mass of contained aluminum is 0% by mass or more and 28% by mass or less.

FIG. 1

**Description**

TECHNICAL FIELD

The present disclosure relates to a YFI-type zeolite, a method for producing the YFI-type zeolite, a hydrocarbon adsorbent and a hydrocarbon adsorption method.

BACKGROUND ART

Exhaust gases discharged from internal combustion engines used in moving bodies, such as automobiles and ships, contain a large amount of hydrocarbons, and hydrocarbons discharged from internal combustion engines are purified by three-way catalysts. However, three-way catalysts require a temperature environment of 200°C or more to function. Thus, hydrocarbons are adsorbed by a hydrocarbon adsorbent in a temperature range in which a three-way catalyst does not function, such as during a so-called cold start, and the hydrocarbons are released from the adsorbent in a temperature range in which the three-way catalyst begins to function, and are decomposed and purified by the three-way catalyst.

The exhaust gas temperature of automobile exhaust gas reaches 900°C or more depending on the engine operating conditions. Thus, the hydrocarbon adsorbent is required to have high heat resistance.

A proposed method for adsorbing and purifying hydrocarbons from exhaust gas at low temperatures includes an adsorption catalyst for exhaust gas purification containing at least one selected from the group consisting of Pt, Pd and Rh on zeolite, such as mordenite, BEA-type zeolite or ZSM-5, with a mole ratio of silica to alumina (hereinafter also referred to as a "$SiO_2/Al_2O_3$ mole ratio") of 50 to 2000 (Patent Document 1), a molecular sieve supporting Ag (Patent Document 2) or a ZSM-5 zeolite ion-exchanged with Cu or with Cu and at least one metal selected from the group consisting of Co, Ni, Cr, Fe, Mn, Ag, Au, Pt, Pd, Ru, Rh and V (Patent Document 3).

In recent years, YFI-type zeolites have attracted attention as new hydrocarbon adsorbents. YFI-type zeolites are zeolites having a three-dimensional pore structure in which a two-dimensional 12-membered oxygen ring pore intersects with a one-dimensional 8-membered oxygen ring pore and having an independent one-dimensional 8-membered oxygen ring pore (Patent Literature 4).

PRIOR ART DOCUMENTS

PATENT DOCUMENTS

Patent Document 1: JP-A-07-213910
Patent Document 2: JP-A-06-126165
Patent Document 3: JP-A-06-210163
Patent Document 4: International Publication No. WO 2018/061827

DISCLOSURE OF INVENTION

TECHNICAL PROBLEM

Known hydrocarbon adsorbents are insufficient in durability in a hot water atmosphere, particularly in durability in a hot water atmosphere at a high temperature of approximately 900°C. Thus, when exposed to a hot water atmosphere, adsorbed hydrocarbons are easily desorbed at a lower temperature.

It is an object of the present disclosure to provide at least one of a YFI-type zeolite that provides a hydrocarbon adsorbent with a small difference in desorption starting temperature due to hydrothermal durability treatment, a method for producing the YFI-type zeolite, a hydrocarbon adsorbent containing the YFI-type zeolite and a hydrocarbon adsorption method using the YFI-type zeolite.

SOLUTION TO PROBLEM

The present inventors have studied improvement in high-temperature durability of a YFI-type zeolite. As a result, paying attention to the fact that extra-framework aluminum of a YFI-type zeolite subjected to dealuminization treatment has an influence on high-temperature durability, it has been found that a decrease in extra-framework aluminum reduces a difference in desorption starting temperature due to hydrothermal durability treatment of the YFI-type zeolite.

The present invention is defined in the claims, and the gist of the present disclosure is as follows:

[1] A YFI-type zeolite in which a ratio of a mass of extra-framework aluminum to a mass of contained aluminum is 0% by mass or more and 28% by mass or less.

[2] The YFI-type zeolite according to [1], wherein a mole ratio of silica to alumina ($SiO_2/Al_2O_3$) is 20 or more and 100 or less.

[3] The YFI-type zeolite according to [1] or [2], wherein the zeolite has a BET specific surface area of 300 m$^2$/g or more and 700 m$^2$/g or less.

[4] The YFI-type zeolite according to any one of [1] to [3], comprising an alkali metal.

[5] The YFI-type zeolite according to any one of [1] to [3], comprising at least one selected from the group consisting of sodium, potassium, cesium and rubidium.

[6] A method for producing a YFI-type zeolite, comprising treating a YFI-type zeolite precursor with at least one acid of hydrochloric acid and sulfuric acid at 60°C or more and 100°C or less.

[7] The method for producing a YFI-type zeolite according to [6], wherein the acid is hydrochloric acid.

[8] The method for producing a YFI-type zeolite according to [6] or [7], wherein a mole ratio of silica to alumina ($SiO_2/Al_2O_3$) in the YFI-type zeolite precursor is less than 25.

[9] A hydrocarbon adsorbent comprising the YFI-type zeolite according to any one of [1] to [5]

[10] A hydrocarbon adsorption method using the hydrocarbon adsorbent according to [9].

ADVANTAGEOUS EFFECTS OF INVENTION

The present disclosure can provide at least one of a YFI-type zeolite with a small difference in desorption starting temperature due to hydrothermal durability treatment, a method for producing the YFI-type zeolite, a hydrocarbon adsorbent containing the YFI-type zeolite and a hydrocarbon adsorption method using the YFI-type zeolite.

BRIEF DESCRIPTION OF DRAWINGS

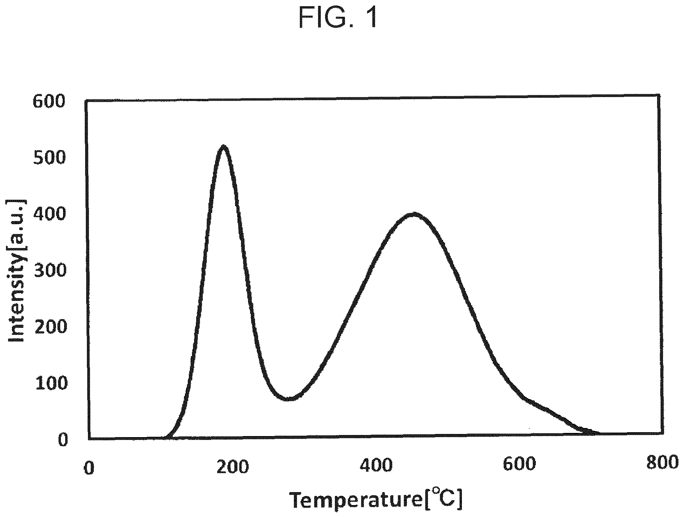

[Fig. 1] Fig. 1 is a difference spectrum in NH$_3$-TPD measurement of Example 1.

DESCRIPTION OF EMBODIMENTS

The present disclosure is described in the following embodiments. The terms used in the present embodiment are described below.

"Aluminosilicate" is a composite oxide with a structure in which a network of aluminum (Al) and silicon (Si) is repeated vis oxygen (O). Among aluminosilicates, in a powder X-ray diffraction (hereinafter also referred to as "XRD") pattern, an aluminosilicate with a crystalline XRD peak is a "crystalline aluminosilicate", and an aluminosilicate with no crystalline XRD peak is an "amorphous aluminosilicate".

In the present embodiment, an XRD pattern may be obtained by XRD measurement under the following conditions:

Accelerating current and voltage: 40 mA and 40 kV
Radiation source: CuKα radiation ($\lambda$ = 1.5405 angstroms)
Measurement mode: continuous scanning
Scan condition: 40 degrees/minute
Measurement range: $2\theta$ = 3 to 43 degrees
Detector: semiconductor detector

A crystalline XRD peak is a peak detected by specifying $2\theta$ of a peak top in analysis of an XRD pattern using general analysis software (for example, SmartLab Studio II, available from Rigaku Corporation) and may be an XRD peak with a half-width of $2\theta$ = 0.50 degrees or less.

"Zeolite" is a compound with a regular structure in which framework atoms (hereinafter also referred to as "T atoms") are bonded via oxygen (O), and the T atoms are composed of at least one of a metal atom and/or a metalloid atom. The metalloid atom may be at least one selected from the group consisting of boron (B), silicon (Si), germanium (Ge), arsenic (As), antimony (Sb) and tellurium (Te).

A "zeolite-like substance" is a compound with a regular structure in which T atoms are bonded vis oxygen, and the T atoms include at least an atom other than metals and metalloids (hereinafter also referred to as a "non-metal atom"). The non-metal atom may be phosphorus (P). The zeolite-like substance may be a complex phosphorus compound containing phosphorus (P) as a T atom, such as aluminophosphate (AlPO) or silicoaluminophosphate (SAPO).

The "regular structure (hereinafter also referred to as a "zeolite structure")" in zeolites or zeolite-like substances is a framework structure specified by a structure code defined by the Structure Commission of the International Zeolite Association (hereinafter also referred to simply as a "structure code"). For example, a YFI structure is a framework structure specified by a structure code "YFI". The YFI structure can be identified by comparison with an XRD pattern described in YFI of Zeolite Framework Types on the home page of the Structure Commission of IZA, http://www.iza-struture.org/databases/ (hereinafter also referred to as a "reference pattern"). The zeolite structure is synonymous with the framework structure, the crystal structure or the crystalline phase.

In the present embodiment, "-type zeolite", such as "YFI-type zeolite", means a zeolite with a zeolite structure of the structure code, preferably a crystalline aluminosilicate with a zeolite structure of the structure code.

A YFI-type zeolite according to the present embodiment is described below.

In the YFI-type zeolite according to the present embodiment, the ratio of the mass of extra-framework aluminum to the mass of contained aluminum (that is, the mass ratio of extra-framework aluminum to aluminum in the YFI-type zeolite; hereinafter also referred to as the "extra-framework Al ratio") is 0% by mass or more and 28% by mass or less, preferably 5% by mass or more and 28% by mass or less, more preferably 10% by mass or more and 28% by mass or less, still more preferably 15% by mass or more and 28% by mass or less, particularly preferably 20% by mass or more and 25% by mass or less. An extra-framework Al ratio in these ranges tends to result in a small difference in desorption starting temperature due to hydrothermal durability treatment. A higher extra-framework Al ratio tends to result in a higher desorption starting temperature. The extra-framework Al ratio may be any combination of the upper limit and the lower limit described above.

The extra-framework Al ratio is determined using the following equation:

$$\text{Extra-framework Al ratio (\% by mass)} = \text{(mass of contained aluminum - mass of intra-framework Al) (g)/mass of contained aluminum (g)} \times 100$$

The "contained aluminum" is all aluminum atoms contained in the YFI-type zeolite according to the present embodiment and is the total of aluminum atoms present as T atoms of the YFI-type zeolite according to the present embodiment (intra-framework Al) and aluminum atoms present as atoms other than the T atoms of the YFI-type zeolite (hereinafter also referred to as "extra-framework Al"). The "mass of contained aluminum" is the mass of the total of the intra-framework Al and the extra-framework Al in terms of alumina ($Al_2O_3$) and corresponds to the total mass of the intra-framework Al and the extra-framework Al. The mass of contained aluminum can be determined by composition analysis. The composition analysis is, for example, inductively coupled plasma atomic emission spectrometry (ICP-AES).

As long as the extra-framework Al ratio described above is satisfied, the mass of contained aluminum is arbitrary. For example, the mass of contained aluminum (hereinafter also referred to as "$Al_{Total}$") per unit mass (1 g) of the YFI-type zeolite according to the present embodiment is 15 mg or more or 20 mg or more, and 80 mg or less, 70 mg or less or less than 60 mg. The upper limit and the lower limit of $Al_{Total}$ per unit mass (1 g) of the YFI-type zeolite may be any combination of those described above. The mass of the intra-framework Al and the mass of the extra-framework Al are based on alumina and are determined using the following equations:

$$\text{Mass of intra-framework Al (g)} = \text{amount of solid acid (mol/g)/2} \times \text{molecular weight of alumina (101.96 (g/mol))}$$

$$\text{Mass of extra-framework Al (g)} = Al_{Total} \text{ (g) - mass of intra-framework Al (g)}$$

The amount of solid acid can be determined by a general $NH_3$-TPD method. The $NH_3$-TPD measurement may be performed by the following method using an ordinary catalyst analyzer (for example, BELCAT II, manufactured by MicrotracBEL).

<Measurement Sample>

Sample: H-type or $NH_4$-type YFI-type zeolite 0.05 g

<Pretreatment>

Atmosphere: in a helium flow
Temperature: 500°C
Gas flow rate: 50 mL/min
Time: 1 hour

<NH$_3$-TPD Measurement>

A gas mixture containing 1% by volume of ammonia and 99% by volume of helium gas is passed at 100°C for 30 minutes through a sample after pretreatment. The gas mixture is then replaced with helium gas, and the helium gas is passed through for 15 minutes to remove residual ammonia in the atmosphere. After the residual ammonia is removed, the temperature is increased to 710°C at a rate of 10°C/min in a helium flow at a flow rate of 30 mL/min, and ammonia is continuously quantified with a gas chromatograph equipped with a thermal conductivity detector (TCD) to obtain a desorption spectrum of ammonia.

A blank spectrum is also obtained in the same manner as in the method for obtaining a desorption spectrum of ammonia except that helium gas is used instead of the gas mixture containing 1% by volume of ammonia and 99% by volume of helium gas.

In a spectrum obtained by subtracting the blank spectrum from the desorption spectrum of ammonia (hereinafter also referred to as a "difference spectrum"), a desorption peak with an apex at 300°C or more is regarded as a desorption peak of ammonia adsorbed on a solid acid, the amount of ammonia desorption is determined from the peak area of the peak, and the ratio (mmol/g) of the amount of ammonia desorption (mmol) to the sample mass (g) may be regarded as the amount of solid acid.

Analysis of a difference spectrum, such as calculation of the amount of ammonia desorption, may be performed using general analysis software (for example, ChemMaster for Windows ver. 1.4.9, available from MicrotracBEL).

The YFI-type zeolite according to the present embodiment preferably has a SiO$_2$/Al$_2$O$_3$ mole ratio of 20 or more, 25 or more, 30 or more or 40 or more, and 100 or less, 80 or less, 60 or less or 50 or less. A smaller SiO$_2$/Al$_2$O$_3$ mole ratio in these ranges tends to result in a higher desorption starting temperature. The upper limit and the lower limit of the SiO$_2$/Al$_2$O$_3$ mole ratio may be any combination of those described above.

The YFI-type zeolite according to the present embodiment has an XRD peak specified as the YFI structure in its XRD pattern and may have an XRD pattern with at least the following XRD peaks.

[Table 1]

| Interplanar spacing d (angstroms) | Relative intensity (%) |
|---|---|
| 12.5±0.6 | 5-75 |
| 5.39±0.10 | 15-85 |
| 4.36±0.07 | 5-75 |
| 4.06±0.07 | 30-130 |
| 3.63±0.07 | 30-130 |
| 3.43±0.07 | 100 |
| * The relative intensity is a relative value with respect to the peak intensity at d = 3.43 ± 0.07 angstroms. | |

In the present embodiment, the XRD pattern may have each XRD peak in the table and may have another XRD peak assigned to the YFI structure.

The YFI-type zeolite according to the present embodiment preferably has at least the following XRD peaks in its XRD pattern.

[Table 2]

| Interplanar spacing d (angstroms) | Relative intensity (%) |
|---|---|
| 15.7±0.8 | 1-25 |

(continued)

| Interplanar spacing d (angstroms) | Relative intensity (%) |
|---|---|
| 12.5±0.6 | 5-75 |
| 9.82±0.4 | 1-40 |
| 9.10±0.4 | 3-50 |
| 5.39±0.10 | 15-85 |
| 4.36±0.07 | 5-75 |
| 4.06±0.07 | 30-130 |
| 3.63±0.07 | 30-130 |
| 3.43±0.07 | 100 |
| 3.15±0.07 | 10-80 |
| * The relative intensity is a relative value with respect to the peak intensity at d = 3.43 ± 0.07 angstroms. | |

The YFI-type zeolite according to the present embodiment may have an XRD peak with a relative intensity of less than 1%, in addition to the peaks described above. However, such a low-intensity XRD peak need not be considered for identification of the crystal structure.

The YFI-type zeolite according to the present embodiment preferably has a BET specific surface area of 300 $m^2$/g or more and 700 $m^2$/g or less, 300 $m^2$/g or more and 600 $m^2$/g or less, 400 $m^2$/g or more and 600 $m^2$/g or less or 400 $m^2$/g or more and 500 $m^2$/g or less, in terms of high hydrocarbon adsorption capacity. The upper limit and the lower limit of the BET specific surface area may be any combination of those described above.

The YFI-type zeolite according to the present embodiment preferably contains an alkali metal, preferably at least one selected from the group consisting of sodium, potassium, cesium and rubidium, more preferably at least one selected from the group consisting of potassium, cesium and rubidium, still more preferably cesium. When contained in a hydrocarbon adsorbent, an alkali metal tends to improve the hydrocarbon adsorption capacity, for example, increase the amount of hydrocarbon adsorption.

When an alkali metal is contained, the alkali metal is preferably contained as an atom other than the T atoms (an alkali-metal-containing YFI-type zeolite) and is preferably supported on a YFI-type zeolite (an alkali-metal-loaded YFI-type zeolite).

Next, a method for producing the YFI-type zeolite according to the present embodiment is described.

The method for producing the YFI-type zeolite according to the present embodiment includes a step of treating a YFI-type zeolite precursor with at least one acid of hydrochloric acid and sulfuric acid at 60°C or more and 100°C or less. The acid for treating the YFI-type zeolite precursor is preferably hydrochloric acid. More preferably, the production method according to the present embodiment is a method for producing a YFI-type zeolite including a step of treating a YFI-type zeolite precursor having a $SiO_2/Al_2O_3$ mole ratio of less than 25 with hydrochloric acid at 60°C or more and 100°C or less. A YFI-type zeolite produced by the production method can have a small difference in desorption starting temperature due to hydrothermal durability treatment.

<Acid Treatment Step>

The YFI-type zeolite precursor (hereinafter also referred to as a "precursor YFI") to be subjected to a step of treating with at least one acid of hydrochloric acid and sulfuric acid (hereinafter also referred to as "hydrochloric acid or the like") at 60°C or more and 100°C or less (hereinafter also referred to as an "acid treatment step") may be any YFI-type zeolite. The acid treatment step may be repeatedly performed, and the production method according to the present embodiment may include a step of treating the YFI-type zeolite after the acid treatment step with hydrochloric acid or the like. Although the YFI-type zeolite is a synthetic zeolite produced by crystallizing a composition containing an organic structure-directing agent, the precursor YFI is preferably a YFI-type zeolite containing no organic structure-directing agent (hereinafter also referred to as "SDA").

The precursor YFI preferably has a $SiO_2/Al_2O_3$ mole ratio of 10 or more, 12 or more or 15 or more, and less than 25, 22 or less, 20 or less or less than 20.

The extra-framework Al ratio of the precursor YFI is, for example, but not limited to, more than 28% by mass or 30% by mass or more, and 50% by mass or less or 40% by mass or less. The $Al_{Total}$ per unit mass (1 g) of the precursor YFI may be 60 mg or more or 75 mg or more, and 150 mg or less, 100 mg or less or 95 mg or less.

The precursor YFI is preferably a YFI-type zeolite containing no SDA and having a $SiO_2/Al_2O_3$ mole ratio of less than 25. Furthermore, the precursor YFI is preferably a YFI-type zeolite after crystallization and removal of SDA. More specifically, the precursor YFI is preferably at least one of a YFI-type zeolite after crystallization and a YFI-type zeolite after calcination, more preferably a YFI-type zeolite after calcination (hereinafter also referred to as a "calcined YFI-type zeolite"). The calcination in the calcined YFI-type zeolite is particularly calcination to remove SDA from the YFI-type zeolite after crystallization and is, for example, calcination at 400°C or more and 800°C or less.

When the precursor YFI contains SDA, the SDA is preferably removed before the acid treatment step and, for example, the SDA is preferably removed by calcination. The calcination may be performed under any conditions, for example, in an oxidizing atmosphere at a calcination temperature of 400°C or more and 800°C or less for a calcination time of 0.5 hours or more and 12 hours or less.

In the acid treatment step, the precursor YFI may be brought into contact with hydrochloric acid or the like at 60°C or more and 100°C or less, and the precursor YFI and hydrochloric acid may preferably be mixed together and stirred at 60°C or more or 70°C or more and 100°C or less or 90°C or less. An increase in the mixing temperature of the precursor YFI and an acid (hereinafter also referred to as the "acid treatment temperature") tends to result in a higher $SiO_2/Al_2O_3$ mole ratio of the YFI-type zeolite according to the present embodiment, and a lower acid treatment temperature tends to result in a lower $SiO_2/Al_2O_3$ mole ratio of the YFI-type zeolite according to the present embodiment.

The slurry concentration of slurry containing the precursor YFI, hydrochloric acid and the like is preferably, but not limited to, 5% by mass or more, 10% by mass or more or 15% by mass or more, and 40% by mass or less, 30% by mass or less or 20% by mass or less. The slurry concentration is the mass concentration of the precursor YFI in slurry calculated using the following equation:

$$\text{Slurry concentration (\% by mass)} = \text{mass of precursor YFI (g)}/\text{mass of slurry (g)} \times 100$$

The concentration of hydrochloric acid or the like (hereinafter also referred to as the "acid concentration") may be, but is not limited to, 0.1 mol/L or more and 10 mol/L or less, preferably 0.1 mol/L or more, 0.5 mol/L or more or more than 1.0 mol/L, and 8.0 mol/L or less, 6.0 mol/L or less or 5.0 mol/L or less. The upper limit and the lower limit of the acid concentration may be any combination of those described above. A higher acid concentration tends to result in the YFI-type zeolite with a higher $SiO_2/Al_2O_3$ mole ratio. On the other hand, a lower acid concentration tends to result in the YFI-type zeolite with a lower $SiO_2/Al_2O_3$ mole ratio.

The $SiO_2/Al_2O_3$ mole ratio of the YFI-type zeolite after the acid treatment step is preferably higher than the $SiO_2/Al_2O_3$ mole ratio of the precursor YFI.

<Method for Producing Precursor YFI>

The precursor YFI may be produced from the YFI-type zeolite by any method. The precursor YFI may be a YFI-type zeolite produced by a method including a step of crystallizing a composition containing a silica source, an alumina source, an alkali source and water (hereinafter also referred to as a "raw material composition") (hereinafter also referred to as a "crystallization step").

The silica source may be a compound containing silicon (Si), for example, at least one selected from the group consisting of colloidal silica, amorphous silica, sodium silicate, tetraethyl orthosilicate, aluminosilicate gel and aluminosilicate, preferably at least one of colloidal silica and amorphous silica.

The alumina source may be a compound containing aluminum (Al), for example, at least one selected from the group consisting of aluminum nitrate, aluminum sulfate, sodium aluminate, aluminum hydroxide, aluminum chloride, aluminosilicate gel, metallic aluminum and aluminosilicate, preferably at least one of aluminum hydroxide and aluminosilicate.

The alkali source is, for example, at least one selected from the group consisting of various salts, such as hydroxides, halides, and carbonates of lithium, sodium, potassium, rubidium, cesium, francium, magnesium, calcium or strontium, preferably a hydroxide of at least one of sodium and potassium, more preferably hydroxides of sodium and potassium (that is, a hydroxide of sodium and a hydroxide of potassium).

In the crystallization step, if necessary, the raw material composition may contain SDA. To simplify the production operation, the raw material composition does not necessarily contain SDA. On the other hand, when the raw material composition contains SDA, the YFI-type zeolite is easily crystallized.

The SDA may be an ammonium cation directing the YFI structure, for example, a dimethyldipropylammonium cation (hereinafter also referred to as "$Me_2Pr_2N^+$"). The raw material composition may contain $Me_2Pr_2N^+$ as a salt, and

a salt containing $Me_2Pr_2N^+$ is, for example, at least one selected from the group consisting of dimethyldipropylammonium hydroxide, dimethyldipropylammonium chloride and dimethyldipropylammonium bromide.

The raw material composition may contain a seed crystal. The seed crystal increases the crystallization rate of the YFI-type zeolite, can reduce the time required for crystallization of the YFI-type zeolite and improves the yield of the YFI-type zeolite.

The seed crystal is preferably an aluminosilicate with an LTL structure, an LTA structure, an MOR structure, an MFI structure, a *BEA structure, an FAU structure, a CHA structure or a YFI structure.

The seed crystal preferably has a $SiO_2/Al_2O_3$ mole ratio of 2 or more and 100 or less, more preferably 3 or more and 60 or less.

Although a low seed crystal content is preferred, in consideration of the reaction rate, the effect of reducing impurities and the like, the content is preferably 0.1% by mass or more and 60% by mass or less, more preferably 0.5% by mass or more and 40% by mass or less, of the mass of silicon (excluding silicon of the seed crystal) contained in the raw material composition in terms of silica.

The raw material composition may preferably be the following composition:

$SiO_2/Al_2O_3$ mole ratio = 10 or more and 50 or less
$Me_2Pr_2N^+/SiO_2$ mole ratio = 0.05 or more and 0.30 or less
$Na/SiO_2$ mole ratio = 0.05 or more and 0.60 or less
$K/SiO_2$ mole ratio = 0.05 or more and 0.60 or less
$H_2O/SiO_2$ mole ratio = 3 or more and 50 or less

Preferably, the raw material composition is crystallized by hydrothermal treatment in the crystallization step. The hydrothermal treatment conditions may be the following conditions:

Crystallization temperature: 140°C or more and 180°C or less
Crystallization time: 1 day or more and 10 days or less
Crystallization pressure: autogenous pressure

The precursor YFI is produced in the crystallization step. After the crystallization step, the resulting precursor YFI is preferably collected, washed, dried and calcined by any method.

<Ion Exchange Step>

The YFI-type zeolite after the acid treatment step is preferably subjected to a step of increasing the solid acid in the zeolite (hereinafter also referred to as an "ion exchange step"). The ion exchange conditions may be any conditions and may include bringing the YFI-type zeolite into contact with aqueous ammonium chloride at 20°C or more and 200°C or less. This converts a cation type of the YFI-type zeolite to an ammonium type.

When the YFI-type zeolite after the acid treatment step contains an alkali metal, it is preferable to use a compound of the alkali metal, and it is more preferable to use an inorganic acid salt containing the alkali metal or at least one selected from the group consisting of sulfates, nitrates, acetates and chlorides containing the alkali metal.

The alkali metal may be contained in at least one of an ion-exchange site and a pore of the zeolite and may be contained specifically by at least one selected from the group consisting of a method of mixing an aqueous solution containing an alkali metal compound with the zeolite, an ion-exchange method, an evaporation-to-dryness method and an incipient wetness impregnation method, preferably by at least one of an incipient wetness impregnation method or an ion-exchange method, more preferably by an ion-exchange method.

The YFI-type zeolite according to the present embodiment is used as a hydrocarbon adsorbent containing the YFI-type zeolite and may be a hydrocarbon adsorbent composed only of the YFI-type zeolite according to the present embodiment. The YFI-type zeolite according to the present embodiment may also be used as a carrier of a hydrocarbon adsorbent.

The hydrocarbon adsorbent according to the present embodiment may have any shape depending on the use and may preferably be at least one of a powder and a formed body. A specific shape of the formed body may be at least one selected from the group consisting of spherical, approximately spherical, elliptical, discoidal, cylindrical, polyhedral, irregular-shaped and petal-shaped.

When the hydrocarbon adsorbent is used as a powder, the hydrocarbon adsorbent may be mixed with a solvent, such as water or an alcohol, to form a slurry, and the slurry may be applied to a substrate to produce an adsorbent.

When the hydrocarbon adsorbent according to the present embodiment is formed into a formed body, the hydrocarbon adsorbent may be mixed with a binder, if necessary, and may be formed by any method. Preferably, the binder is, for example, at least one selected from the group consisting of silica, alumina, kaolin, attapulgite, montmorillonite, bentonite, alloane and sepiolite. A forming method is, for example, at least one selected from the group consisting of tumbling granulation forming, agitation granulation forming, press forming, extrusion forming, injection forming, slip casting and sheet forming.

The hydrocarbon adsorbent according to the present embodiment can be used for a hydrocarbon adsorption method.

The hydrocarbon adsorbent according to the present embodiment can adsorb a hydrocarbon by a method including a step of bringing a hydrocarbon-containing fluid into contact with the hydrocarbon adsorbent according to the present embodiment.

The hydrocarbon-containing fluid is, for example, a hydrocarbon-containing gas or a hydrocarbon-containing liquid.

The hydrocarbon-containing gas is a gas containing at least one hydrocarbon, preferably a gas containing two or more hydrocarbons. The hydrocarbon contained in the hydrocarbon-containing gas may be at least one selected from the group consisting of paraffin, olefin and aromatic hydrocarbon. The number of carbon atoms of the hydrocarbon may be 1 or more and is preferably 1 or more and 15 or less. The hydrocarbon contained in the hydrocarbon-containing gas is preferably at least two selected from the group consisting of methane, ethane, ethylene, propylene, butane, linear paraffin with 5 or more carbon atoms, linear olefin with 5 or more carbon atoms, benzene, toluene and xylene, more preferably at least two selected from the group consisting of methane, ethane, ethylene, propylene, butane, benzene, toluene and xylene, still more preferably at least one selected from the group consisting of methane, ethane, ethylene and propylene and at least one selected from the group consisting of benzene, toluene and xylene. The hydrocarbon-containing gas may contain at least one selected from the group consisting of carbon monoxide, carbon dioxide, hydrogen, oxygen, nitrogen, nitrogen oxide, sulfur oxide and water. Specific examples of the hydrocarbon-containing gas include combustion gas, such as exhaust gas from internal combustion engines.

Preferably, the contact temperature between the hydrocarbon-containing fluid and the hydrocarbon adsorbent according to the present embodiment in this step ranges from room temperature to 200°C.

EXAMPLES

The present embodiment is described in more detail in the following examples. However, the present embodiment is not limited to these examples.

(Identification of Crystal Structure)

A general X-ray diffractometer (apparatus name: Ultima IV Protectus, manufactured by Rigaku Corporation) was used for XRD measurement of a sample. The measurement conditions are as follows:

Accelerating current and voltage: 40 mA and 40 kV
Radiation source: CuK$\alpha$ radiation ($\lambda$ = 1.5405 angstroms)
Measurement mode: continuous scanning
Scan condition: 40 degrees/minute
Measurement range: 2$\theta$ = 3 to 43 degrees
Divergence height limiting slit: 10 mm
Divergence/incident slit: 1 degree
Light-receiving slit: open
Light-receiving Soller slit: 5 degrees
Detector: semiconductor detector (D/teX Ultra)
Filter: Ni filter

The resulting XRD pattern was compared with a reference pattern to identify the zeolite structure.

(Composition Analysis)

A sample was dissolved in an aqueous mixture of hydrofluoric acid and nitric acid to prepare a sample solution. A general ICP apparatus (apparatus name: OPTIMA5300DV, manufactured by PerkinElmer, Inc.) was used for inductively coupled plasma atomic emission spectrometry (ICP-AES) of the sample solution. The $SiO_2/Al_2O_3$ mole ratio and $Al_{Total}$ of the sample were determined from measured values of Si and Al.

(Measurement of Amount of Solid Acid by NH$_3$-TPD Method)

The NH$_3$-TPD measurement was performed by the following method using an ordinary catalyst analyzer (apparatus name, BELCAT II, manufactured by MicrotracBEL).

<Measurement Sample>

Sample: 0.05 g

<Pretreatment>

Atmosphere: in a helium flow
Temperature: 500°C
Gas flow rate: 50 mL/min
Time: 1 hour

<NH$_3$-TPD Measurement

A gas mixture containing 1% by volume of ammonia and 99% by volume of helium gas was passing at 100°C through the sample after the pretreatment to adsorb ammonia on the sample to saturation. After feeding the gas mixture for 30 minutes, the gas mixture was replaced with helium gas, and the helium gas was passed through for 15 minutes to remove residual ammonia in the atmosphere. After the residual ammonia was removed, the temperature was increased to 710°C at a rate of 10°C/min in a helium flow at a flow rate of 30 mL/min. Thus, ammonia adsorbed on the sample was desorbed from the sample. The ammonia desorbed from the sample was continuously quantified with a gas chromatograph equipped with a thermal conductivity detector (TCD) to obtain a desorption spectrum of ammonia.
A blank spectrum was also obtained in the same manner as in the method for obtaining a desorption spectrum of ammonia except that helium gas was used instead of the gas mixture containing 1% by volume of ammonia and 99% by volume of helium gas.
The amount of solid acid was determined from a spectrum obtained by subtracting the blank spectrum from the desorption spectrum of ammonia (hereinafter also referred to as a "difference spectrum").
More specifically, in the difference spectrum, a desorption peak with an apex (an extreme value) at 300°C or more was regarded as a desorption peak of ammonia, and analysis software (ChemMaster for Windows ver. 1.4.9, available from MicrotracBEL) attached to the catalyst analyzer was used to determine the area (integral value) of the peak as the amount of ammonia desorption. The ratio of the amount of ammonia desorption (mmol) to the sample mass (g) was defined as the amount of solid acid (mmol/g).

(Measurement of BET Specific Surface Area)

A measurement sample was degassed from an air atmosphere at 350°C for 2 hours as pretreatment. After the pretreatment, a nitrogen adsorption isotherm at a measurement temperature of 77K was measured with an ordinary nitrogen adsorption apparatus (apparatus name: BELSORP-mini II, manufactured by MicrotracBEL). A BET specific surface area was calculated by a BET method in the relative pressure range of 0.01 or more and 0.15 or less in the nitrogen adsorption isotherm.

(Calculation of Extra-Framework Al Ratio)

The extra-framework Al ratio was calculated using the following equation:

$$\text{Extra-framework Al ratio (\% by mass)} = [\text{Al}_{Total} \text{ (g)} - (\text{amount of solid acid (mol/g)/2} \times 101.96 \text{ (g/mol)})]/\text{Al}_{Total} \text{ (g)} \times 100$$

Synthesis Example 1

Colloidal silica (product name: Ludox AS-40, manufactured by Sigma-Aldrich Corporation), FAU-type zeolite (product name: HSZ-350HUA, manufactured by Tosoh Corporation), $Me_2Pr_2NOH$, NaOH, KOH and $H_2O$ were mixed to produce a raw material composition with the following molar composition.

$$SiO_2:0.025Al_2O_3:0.17Me_2Pr_2NOH:0.15NaOH:0.17KOH:7H_2O$$

The raw material composition has the following molar composition:

$SiO_2/Al_2O_3$ mole ratio = 40
$Me_2Pr_2N^+/SiO_2$ mole ratio = 0.17
$Na/SiO_2$ mole ratio = 0.15
$K/SiO_2$ mole ratio = 0.17
$H_2O/SiO_2$ mole ratio = 7

The raw material composition was charged into an autoclave with an internal volume of 80 mL and was crystallized at 160°C for 6 days under static conditions to produce a zeolite. The zeolite was calcined at 550°C in air. The zeolite was a YFI-type zeolite (calcined YFI-type zeolite) with a $SiO_2/Al_2O_3$ mole ratio of 18 and an $Al_{Total}$ of 86.2 mg, which was used as a precursor YFI.

EXAMPLE 1

1.4 mol/L of hydrochloric acid and the precursor YFI produced in Synthesis Example 1 were mixed at a slurry concentration of 20% by mass and were stirred at 80°C for 1 hour to produce a slurry. The slurry was filtered and washed to collect the solid content. The collected solid content was mixed with 20% by mass aqueous ammonium chloride, was filtered, was washed and was then dried in air at 110°C overnight. The resulting YFI-type zeolite had a $SiO_2/Al_2O_3$ mole ratio of 42, an $Al_{Total}$ of 38.0 mg and a BET specific surface area of 479 $m^2/g$ and was of a $NH_4$ cation type.
The YFI-type zeolite had a solid acid amount of 0.58 mmol/g and an extra-framework Al ratio of 23% by mass. Fig. 1 shows a difference spectrum of the YFI-type zeolite in the $NH_3$-TPD measurement. In the difference spectrum, two desorption peaks of ammonia can be observed. It can be seen that the desorption peak of ammonia adsorbed on the solid acid is a desorption peak with an apex (an extreme value) at 460 ± 5°C.

EXAMPLE 2

A YFI-type zeolite of a $NH_4$ cation type according to the present example was produced in the same manner as in Example 1 except that 4.8 mol/L of hydrochloric acid was used. The YFI-type zeolite had a $SiO_2/Al_2O_3$ mole ratio of 94, an $Al_{Total}$ of 17.7 mg, a BET specific surface area of 489 $m^2/g$, a solid acid amount of 0.32 mmol/g and an extra-framework Al ratio of 9% by mass.

EXAMPLE 3

A YFI-type zeolite of a $NH_4$ cation type according to the present example was produced in the same manner as in Example 1 except that 3.4 mol/L of hydrochloric acid was used. The YFI-type zeolite had a $SiO_2/Al_2O_3$ mole ratio of 60, an $Al_{Total}$ of 27.5 mg, a BET specific surface area of 496 $m^2/g$, a solid acid amount of 0.44 mmol/g and an extra-framework Al ratio of 18% by mass.

EXAMPLE 4

A YFI-type zeolite of a $NH_4$ cation type according to the present example was produced in the same manner as in Example 1 except that 0.8 mol/L of hydrochloric acid was used, the slurry concentration was 29% by mass, and stirring was performed at 95°C. The YFI-type zeolite had a $SiO_2/Al_2O_3$ mole ratio of 25, an $Al_{Total}$ of 63.6 mg, a BET specific surface area of 451 $m^2/g$, a solid acid amount of 0.90 mmol/g and an extra-framework Al ratio of 28% by mass.

EXAMPLE 5

A YFI-type zeolite of a $NH_4$ cation type according to the present example was produced in the same manner as in Example 1 except that 0.7 mol/L of sulfuric acid was used. The YFI-type zeolite had a $SiO_2/Al_2O_3$ mole ratio of 32, an $Al_{Total}$ of 50.4 mg, a BET specific surface area of 470 m$^2$/g, a solid acid amount of 0.75 mmol/g and an extra-framework Al ratio of 24% by mass.

COMPARATIVE EXAMPLE 1

1.0 mol/L of hydrochloric acid and the precursor YFI produced in Synthesis Example 1 were mixed at a slurry concentration of 15% by mass and were stirred at 25°C for 18 hours. The resulting slurry after the stirring was filtered, was washed, was treated with 20% by mass aqueous ammonium chloride and was dried in air at 110°C overnight. The resulting YFI-type zeolite had a $SiO_2/Al_2O_3$ mole ratio of 42, an $Al_{Total}$ of 38.8 mg and a BET specific surface area of 452 m$^2$/g and was of a $NH_4$ cation type. The YFI-type zeolite had a solid acid amount of 0.50 mmol/g and an extra-framework Al ratio of 34% by mass.

COMPARATIVE EXAMPLE 2

A YFI-type zeolite with a $SiO_2/Al_2O_3$ mole ratio of 18, an $Al_{Total}$ of 86.2mg and a BET specific surface area of 424 m$^2$/g, and of a $NH_4$ cation type was produced in the same manner as in Example 1 except that the precursor YFI was not subjected to the acid treatment step but was treated with 20% by mass aqueous ammonium chloride. The YFI-type zeolite had a solid acid amount of 1.06 mmol/g and an extra-framework Al ratio of 37% by mass.

COMPARATIVE EXAMPLE 3

1.4 mol/L of nitric acid and the precursor YFI produced in Synthesis Example 1 were mixed at a slurry concentration of 20% by mass and were stirred at 80°C for 1 hour. The resulting slurry after the stirring was filtered, was washed, was treated with 20% by mass aqueous ammonium chloride and was dried in air at 110°C overnight. The resulting YFI-type zeolite had a $SiO_2/Al_2O_3$ mole ratio of 43, an $Al_{Total}$ of 38.0 mg and a BET specific surface area of 435 m$^2$/g and was of a $NH_4$ cation type. The YFI-type zeolite had a solid acid amount of 0.53 mmol/g and an extra-framework Al ratio of 29% by mass.

Table 3 shows the results for the examples and comparative examples.

[Table 3]

| | Slurry | | | Treatment temperature [°C] | YFI-type zeolite |
| --- | --- | --- | --- | --- | --- |
| | Acid | Acid concentration [mol/L] | Slurry concentration [mass%] | | Extra-framework Al ratio [mass%] |
| Example 1 | HCl | 1.4 | 20 | 80 | 23 |
| Example 2 | HCl | 4.8 | 20 | 80 | 9 |
| Example 3 | HCl | 3.4 | 20 | 80 | 18 |
| Example 4 | HCl | 0.8 | 29 | 95 | 28 |
| Example 5 | H2SO4 | 0.7 | 20 | 80 | 24 |
| Comparative example 1 | HCl | 1.0 | 15 | 25 | 34 |
| Comparative example 2 | - | - | - | - | 37 |
| Comparative example 3 | HNO3 | 1.4 | 20 | 80 | 29 |

A comparison between the examples and the comparative examples can show that the acid treatment reduces the extra-framework Al ratio, and an acid treatment temperature to 60°C or more and the acid treatment with hydrochloric acid or the like reduce the extra-framework Al ratio. It was shown that the YFI-type zeolites of the examples (for example, Examples 1 and 5 with the same acid concentration as Comparative Example 3) had a lower extra-framework Al ratio than the YFI-type zeolite of Comparative Example 3 treated with nitric acid. It was also shown from Comparative Example 1 and Example 4 that an acid treatment temperature of 60°C or more results in a lower extra-framework Al ratio even at a low acid concentration. It was also shown from Examples 1 to 3 that a higher acid concentration (particularly an acid concentration of 1.0 mol/L or more) tended to result in a lower extra-framework Al ratio.

Measurement Example 1

(Preparation and Pretreatment of Measurement Sample)

2% by mass aqueous cesium chloride was prepared in such an amount that the number of moles of Cs was 4 equivalents with respect to the number of moles of Al in the YFI-type zeolite of the $NH_4$ cation type produced in the examples and comparative examples. The YFI-type zeolite of the $NH_4$ cation type was mixed with the aqueous cesium chloride, was filtered, was washed and was dried in air at 110°C overnight to produce an alkali-metal-containing YFI-type zeolite (a cesium-containing YFI-type zeolite).

The alkali-metal-containing YFI-type zeolite was used as a hydrocarbon adsorbent. The hydrocarbon adsorbent was press-formed and ground into an irregular-shaped formed body with an aggregate size in the range of 20 to 30 mesh, and the formed body was used as a measurement sample according to Examples 1 to 5 and Comparative Examples 1 to 3. For pretreatment, 0.1 g of the measurement sample was charged into an atmospheric pressure fixed-bed flow reaction tube, was treated at 500°C for 1 hour in a nitrogen flow at a flow rate of 200 mL/min and was then cooled to 50°C.

(Hydrocarbon Adsorption)

A hydrocarbon-containing gas was passed through the hydrocarbon adsorbent after the pretreatment. The composition of the hydrocarbon-containing gas and the measurement conditions are as follows:

Hydrocarbon-containing gas: toluene 3000 ppmC by volume (concentration based on methane)

Water: 3% by volume
Nitrogen: balance
Gas flow rate: 200 mL/min
Measurement temperature: 50°C to 600°C
Heating rate: 10 °C/min
Measurement time: 55 minutes

(Measurement of Desorption Starting Temperature of Hydrocarbon)

A hydrogen ionization detector (FID) was used to continuously quantitatively analyze hydrocarbons in the gas that had passed through the hydrocarbon adsorbent. The hydrocarbon concentration of the hydrocarbon-containing gas on the inlet side of the atmospheric pressure fixed-bed flow reaction tube (the concentration based on methane; hereinafter referred to as the "inlet concentration") and the hydrocarbon concentration of the hydrocarbon-containing gas on the outlet side of the atmospheric pressure fixed-bed flow reaction tube (the concentration based on methane; hereinafter referred to as the "outlet concentration") were measured. A state in which the inlet hydrocarbon concentration was higher than the outlet hydrocarbon concentration was regarded as an adsorption stage, a state in which the outlet hydrocarbon concentration was higher than the inlet hydrocarbon concentration was regarded as a desorption stage, and a temperature at which the adsorption stage and the desorption stage were switched was defined as the desorption starting temperature of the hydrocarbon. Table 4 shows the results.

[Table 4]

|  | $SiO_2/Al_2O_3$ mole ratio | Cs/Al mole ratio | Desorption starting temperature (°C) |
|---|---|---|---|
| Example 1 | 42 | 1.0 | 151 |
| Example 2 | 94 | 1.1 | 138 |
| Example 3 | 60 | 1.1 | 152 |
| Example 4 | 25 | 1.0 | 194 |
| Example 5 | 32 | 1.0 | 178 |

(continued)

|  | SiO$_2$/Al$_2$O$_3$ mole ratio | Cs/Al mole ratio | Desorption starting temperature (°C) |
|---|---|---|---|
| Comparative example 1 | 42 | 1.0 | 145 |
| Comparative example 2 | 18 | 1.0 | 179 |
| Comparative example 3 | 42 | 1.1 | 148 |

(Hydrothermal Durability Treatment)

For hydrothermal durability treatment, the hydrocarbon adsorbent was treated in the same manner as in the (Hydrocarbon Adsorption) described above except that a treatment gas was passed through the hydrocarbon adsorbent after the pretreatment under the following conditions:

Treatment gas: water 10% by volume
Dry air: balance
Gas flow rate: 300 mL/min
Space velocity: 6000 h$^{-1}$
Treatment temperature: 900°C
Treatment time: 20 hours

(Measurement of Desorption Starting Temperature of Hydrocarbon after Hydrothermal Durability Treatment)

The desorption starting temperature of a hydrocarbon on the hydrocarbon adsorbent after the hydrothermal durability treatment was measured in the same manner as in the (Measurement of Desorption Starting Temperature of Hydrocarbon) described above. Table 5 shows the results.

[Table 5]

|  | SiO$_2$/Al$_2$O$_3$ mole ratio | Cs/Al mole ratio | Extra-framework Al ratio [mass%] | Desorption starting temperature (°C) |
|---|---|---|---|---|
| Example 1 | 42 | 1.0 | 23 | 145 |
| Example 2 | 94 | 1.1 | 9 | 133 |
| Example 3 | 60 | 1.1 | 18 | 152 |
| Example 4 | 25 | 1.0 | 28 | 192 |
| Example 5 | 32 | 1.0 | 24 | 162 |
| Comparative example 1 | 42 | 1.0 | 34 | 123 |
| Comparative example 2 | 18 | 1.0 | 37 | 97 |
| Comparative example 3 | 42 | 1.1 | 29 | 131 |

It can be seen that the hydrocarbon adsorbents of the examples have a higher desorption starting temperature than the hydrocarbon adsorbents of the comparative examples even after the hydrothermal durability treatment.
Table 6 shows the difference in desorption starting temperature due to the hydrothermal durability treatment.

[Table 6]

| | Difference in desorption starting temperature due to hydrothermal durability treatment (°C) (desorption starting temperature before hydrothermal durability treatment - desorption starting temperature after hydrothermal durability treatment) |
|---|---|
| Example 1 | 6 |
| Example 2 | 5 |
| Example 3 | 0 |
| Example 4 | 2 |
| Example 5 | 16 |
| Comparative example 1 | 22 |
| Comparative example 2 | 82 |
| Comparative example 3 | 17 |

These measurement examples show that a hydrocarbon adsorbent containing a YFI-type zeolite with an extra-framework Al ratio of 0% by mass or more and 28% by mass or less has a small difference in desorption starting temperature due to the hydrothermal durability treatment. In particular, it can be seen that the hydrocarbon adsorbents containing the YFI-type zeolite of Examples 2 to 4 have a difference in desorption starting temperature of 5°C or less due to the hydrothermal durability treatment and have an insignificant decrease in the desorption starting temperature even after the hydrothermal durability treatment, thus exhibiting stable hydrocarbon adsorption characteristics.

INDUSTRIAL APPLICABILITY

The YFI-type zeolite according to the present embodiment can be used for a known application of zeolite, such as an adsorbent, a catalyst or a carrier thereof, and can also be used as a hydrocarbon adsorbent or a carrier thereof. More preferably, the YFI-type zeolite according to the present embodiment can be used in a hydrocarbon adsorption method in an environment exposed to high temperature and high humidity and can particularly be used in a method for adsorbing hydrocarbon in exhaust gas of internal combustion engines, such as automobile exhaust gas.

The entire contents of the description, claims and abstract of Japanese Patent Application No. 2021-93264 filed on June 2, 2021 are hereby incorporated by reference as the disclosure of the description of the present disclosure.

**Claims**

1.  A YFI-type zeolite in which a ratio of a mass of extra-framework aluminum to a mass of contained aluminum is 0% by mass or more and 28% by mass or less.

2.  The YFI-type zeolite according to claim 1, wherein a mole ratio of silica to alumina ($SiO_2/Al_2O_3$) in the zeolite is 20 or more and 100 or less.

3.  The YFI-type zeolite according to claim 1 or 2, wherein the zeolite has a BET specific surface area of 300 $m^2$/g or more and 700 $m^2$/g or less.

4.  The YFI-type zeolite according to claim 1 or 2, comprising an alkali metal.

5.  The YFI-type zeolite according to claim 1 or 2, comprising at least one selected from the group consisting of sodium, potassium, cesium and rubidium.

6.  A method for producing a YFI-type zeolite, comprising treating a YFI-type zeolite precursor with hydrochloric acid or sulfuric acid.

7.  The method for producing a YFI-type zeolite according to claim 6, wherein an acid for treating the YFI-type zeolite precursor is hydrochloric acid, and the treatment is performed at 60°C or more and 100°C or less.

8. The method for producing a YFI-type zeolite according to claim 6 or 7, wherein a mole ratio of silica to alumina ($SiO_2/Al_2O_3$) in the YFI-type zeolite precursor is less than 25.

9. A hydrocarbon adsorbent comprising the YFI-type zeolite according to claim 1 or 2.

10. A hydrocarbon adsorption method using the hydrocarbon adsorbent according to claim 9.

FIG. 1

| INTERNATIONAL SEARCH REPORT | International application No. |
|---|---|
| | **PCT/JP2022/022204** |

**A. CLASSIFICATION OF SUBJECT MATTER**

*C01B 39/48*(2006.01)i; *B01J 20/18*(2006.01)i; *B01J 20/28*(2006.01)i; *B01J 20/30*(2006.01)i
FI:   C01B39/48; B01J20/18 D; B01J20/28 Z; B01J20/30

According to International Patent Classification (IPC) or to both national classification and IPC

**B. FIELDS SEARCHED**

Minimum documentation searched (classification system followed by classification symbols)

C01B33/20-39/54; B01J20/00-20/28; B01J20/30-20/34

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580 (JDreamIII); JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2020-163345 A (TOSOH CORP.) 08 October 2020 (2020-10-08)<br>entire text | 1-10 |
| A | JP 2020-533164 A (BASF CORP.) 19 November 2020 (2020-11-19)<br>entire text | 1-10 |
| A | WO 2020/121812 A1 (THE UNIVERSITY OF TOKYO) 18 June 2020 (2020-06-18)<br>entire text | 1-10 |
| A | JP 2012-148968 A (TOSOH CORP.) 09 August 2012 (2012-08-09)<br>entire text | 1-10 |
| A | JP 2020-66564 A (TOSOH CORP.) 30 April 2020 (2020-04-30)<br>entire text | 1-10 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 August 2022** | **09 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/022204**

| Patent document cited in search report | | | Publication date (day/month/year) | Patent family member(s) | | | Publication date (day/month/year) |
|---|---|---|---|---|---|---|---|
| JP | 2020-163345 | A | 08 October 2020 | (Family: none) | | | |
| JP | 2020-533164 | A | 19 November 2020 | US entire text EP entire text CN | 2020-0206723 003678774 111315482 | A1 A1 A | |
| WO | 2020/121812 | A1 | 18 June 2020 | EP entire text | 003896036 | A1 | |
| JP | 2012-148968 | A | 09 August 2012 | US entire text EP entire text CN KR | 2013-0272937 002659973 103391814 10-2013-0132944 | A1 A1 A1 A | |
| JP | 2020-66564 | A | 30 April 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7213910 A
- JP 6126165 A
- JP 6210163 A
- WO 2018061827 A
- JP 2021093264 A